## Europäisches Patentamt

(19) **European Patent Office**

**Office européen des brevets**

(11) Publication number: **0 055 432**
**B1**

(12) **EUROPEAN PATENT SPECIFICATION**

(45) Date of publication of patent specification: **20.03.85**

(51) Int. Cl.⁴: **A 21 D 13/08, A 23 G 3/00**

(21) Application number: **81110572.5**

(22) Date of filing: **18.12.81**

(54) Use of bran in fillings for nutrient bars.

(30) Priority: **27.12.80 DE 3049210**

(43) Date of publication of application:
**07.07.82 Bulletin 82/27**

(45) Publication of the grant of the patent:
**20.03.85 Bulletin 85/12**

(84) Designated Contracting States:
**AT BE CH FR GB IT LI LU NL SE**

(56) References cited:
**DE-A-2 746 479**
**FR-A-2 409 008**
**GB-A-1 294 426**
**US-A-2 157 485**
**US-A-2 355 031**
**US-A-3 676 151**

**CHEMICAL ABSTRACTS, vol. 92, no. 19, 12th May 1980, page 475, no. 162440v, Columbus Ohio (USA);**

(73) Proprietor: **Richardson GmbH**
**H.-S.-Richardson-Strasse Postfach 1661**
**D-6080 Gross-Gerau (DE)**

(72) Inventor: **Wienecke, Horst, Dr.**
**Mörfelder Strasse 42**
**D-6080 Gross-Gerau (DE)**
Inventor: **Stock, Karl Wilhelm**
**Wiesenstrasse 2**
**D-6087 Büttelborn 2 (DE)**
Inventor: **Brudney, Norman, Dr.**
**119 Avenue Victor Hugo**
**F-75116 Paris (FR)**

(74) Representative: **Beil, Walter, Dr. et al**
**BEIL, WOLFF & BEIL Rechtsanwälte**
**Adelonstrasse 58**
**D-6230 Frankfurt am Main 80 (DE)**

Courier Press, Leamington Spa, England.

# Description

There are nutrient bars known which have a filling of chocolate, nuts and many other materials or their mixtures between two waffles, biscuits, wafers or the like. In order to maintain the original crunchiness of the baker's ware serving as covering sheets as waffles and the like it is necessary to keep the water content of the filling small. Products of this kind known on the market have a moisture content in the filling of less than 5 per cent by weight. Another possibility is to treat the bakery parts in such a way that they cannot absorb moisture. The moisture content of the filling then can be higher and for example 15 per cent by weight.

Both solutions, however, show disadvantages. In many cases it is difficult to reduce the moisture content of the filling in a sufficient extent because of the nature of the raw materials. The pretreatment of the bakery part on the other hand requires additional steps of treatment. With the fillings according to this invention these problems do not arise since one can use untreated bakery parts and despite that can use fillings with relatively high moisture contents.

It surprisingly has been found that without a treatment of the covering sheets the moisture content of a filling can amount to 5 up to 20 per cent by weight when one adds bran to the filling. Despite the high moisture content of the filling the waffles or similar bakery pieces which serve as covering sheets remain crunchy after longer period of storing and the finished product has a good taste.

The amount of bran added can vary in large borders between 5 and 50 per cent by weight and depends on the original humidity content of the raw materials of the filling. The amount of bran to be added can be determined by easy calculation. It only is essential that the ready mixture including the bran in its humidity content is within the given borders.

As raw material of the filling one can use various materials, especially honey, fruits, fruit marrow, fruit jellies or jam. To these water containing materials oil seed products can be added as for example hazel nut marrow, cocoa butter or peanut butter. There are no restrictions with regard to the choice of the materials for the filling and consequently fillings of various kinds and compositions are possible and can be used according to this invention. The fillings can be brought between waffles or similar covering sheets in the known manner and one can apply a cover from chocolate, sugar or the like to this product.

DE—A—2 746 479 (1) teaches the use of bran as ballasting material in formed sweets. The swelling and absorbing properties referred to are only mentioned with regard to the effects on the digestion channel. However, it is impossible to take therefrom that the absorbing properties of bran will allow to use nutrient bar fillings with high moisture content (up to 20 p.c. by weight) and still the crunchiness of untreated covering sheets consisting of baked materials will not be affected.

GB—A—1 294 426 (2) discloses vegetable fibrous materials as stabilizers and binders in the specified dry cream powder composition. This is a very special field of application different from that of the invention. It furthermore has to be noted that bran is not described as a binder in (2) while the invention only covers the use of bran in the fillings of nutrient bars. The use of bran for the purpose of the present invention is not obvious from the teaching of this prior art (2).

The following example will exemplify the invention.

## Example

A filling is prepared by using the following components (all parts as parts by weight):

    36 parts honey
    20 parts fig paste
    14 parts hazel nut marrow
    4 parts cherries
    3 parts orangeade
    3 parts apricots.

After these components thoroughly have been mixed with each other

    20 parts roasted wheat bran

have been added. The moisture content of this mixture is 15 per cent by weight.

The filling was applied to a waffle, was covered with a second waffle and then has been coated with chocolate. Even after a longer period of storage the waffles of this nutrient bar were as crunchy as prior to their incorporation into this bar.

## Claim

Use of bran in the amounts of 5—50 per cent by weight in fillings for nutrient bars having a water content of 5—20 per cent by weight to keep the cover sheets crisp, said cover sheets being waffles, wafers or biscuits.

## Revendication

Utilisation du son en quantités de 5—50% en poids dans les remplissages de barres nutritives ayant une teneur en eau de 5 à 20% en poids pour maintenir croustillantes les feuilles de couverture, lesdites feuilles de couverture étant des gaufres, gaufrettes ou biscuits.

## Patentanspruch

Verwendung von Kleie in Anteilen von 5 bis 50 Gew.-% in Füllungen von Ernährungsriegeln, die einen Wassergehalt von 5 bis 20 Gew.-% haben, um die Deckschichten, die Waffeln, Oblaten oder Biskuits sind, knusprig zu halten.